(19) Europäisches Patentamt
European Patent Office
Office européen des brevets

(11) Numéro de publication: **0 202 161**
**A1**

# (12) DEMANDE DE BREVET EUROPEEN

(21) Numéro de dépôt: **86400997.2**

(22) Date de dépôt: **09.05.86**

(51) Int. Cl.⁴: **H01G 4/30**, C04B 41/50, //C03C3/091

(30) Priorité: **13.05.85 FR 8507198**

(43) Date de publication de la demande: **20.11.86 Bulletin 86/47**

(84) Etats contractants désignés: **AT BE DE FR GB IT NL**

(71) Demandeur: **EUROFARAD-EFD**
**93 rue Oberkampf**
**F-75540 Paris Cédex11(FR)**

(72) Inventeur: **Dubuisson, Jacques**
**22, rue Emile Zola**
**F-75015 Paris(FR)**
Inventeur: **Laville, Henri**
**19, rue Jeanne D'Arc**
**F-77400 Lagny(FR)**
Inventeur: **Le Gal, Pascal**
**4, rue de Paris**
**F-77450 Magny Le Hongre(FR)**

(74) Mandataire: **Martin, Jean-Jacques**
**Cabinet REGIMBEAU 26, Avenue Kléber**
**F-75116 Paris(FR)**

## (54) Composant ceramique a protection renforce contre les rayonnements.

(57) L'invention concerne un composant céramique multicouches, comportant un bloc fritté de feuilles empilées de céramique en un premier matériau contenant une forte proportion d'atomes lourds, ce bloc étant pourvu sur l'une au moins de ses faces d'une couche supplémentaire en un second matériau contenant une forte proportion d'atomes légers.

Selon l'invention, le second matériau est un verre, la couche supplémentaire étant réalisée après frittage du bloc de céramique, par dépôt d'une pâte de verre en surface du bloc puis vitrification, de manière à permettre la pénétration du verre dans la céramique et la production d'une zone de diffusion réciproque à l'interface verre-céramique.

EP 0 202 161 A1

# COMPOSANT CERAMIQUE A PROTECTION RENFORCEE CONTRE LES RAYONNEMENTS

La présente invention concerne les composants "durcis", c'est-à-dire les composants assurant une protection renforcée à l'encontre des rayonnements très pénétrants.

Le principe de la protection contre les différents types de rayonnements est en lui-même connu, de même que le rôle spécifique dans cette protection des éléments légers et des éléments lourds. L'invention vise un mode de réalisation particulier dans le cas des composants céramique.

L'invention concerne aussi bien les composants protégés que les composants de protection.

Dans le premier cas, les composants assurent en eux-mêmes leur protection à l'encontre des rayonnements (par exemple des capacités protégées) ; dans le second cas, ils sont principalement destinés à assurer la protection d'autres composants adjacents non protégés en eux-mêmes (tel est le cas par exemple des substrats, qui peuvent ainsi participer à la protection des éléments semiconducteurs qu'ils sont destinés à supporter et éventuellement interconnecter).

L'invention vise plus précisément les composants céramique multicouches comportant un bloc fritté de feuilles empilées de céramique en un premier matériau contenant une forte proportion d'atomes lourds permettant l'absorption des rayonnements incidents de haute énergie. (Par "atomes lourds", on entendra des atomes dont le numéro atomique est supérieur à 25).

Ce bloc est pourvu sur l'une au moins de ses faces d'une couche supplémentaire en un second matériau contenant une forte proportion d'atomes légers, destinés à absorber les rayonnements secondaires émis par les atomes lourds. (Par "atomes légers", des atomes dont le numéro atomique est au plus égal à 25).

Un tel composant a par exemple été décrit dans la demande de brevet français N° 83-18572, au nom de la Demanderesse, pour le cas particulier d'un composant assurant une fonction capacitive, de type condensateur ou substrat à éléments capacitifs intégrés.

Dans ce document, il est proposé, pour la réalisation de la couche supplémentaire en matériau léger, de co-fritter deux céramiques de type différent, tant en ce qui concerne leurs propriétés diélectriques que leur caractère léger ou lourd (du point de vue du numéro atomique des atomes qui les constituent).

Bien que cette structure donne parfaitement satisfaction du point de vue de la protection contre les rayonnements, elle nécessite une adéquation parfaite des deux céramiques, tant du point de vue de leur compatibilité chimique que de leurs propriétés thermiques et mécaniques.

Par ailleurs, la cohesion des deux céramiques à leur interface étant liée à une diffusion à l'état solide essentiellement, le composant est sensible aux différentes contraintes internes, notamment les contraintes développées et accumulées au cours des traitements thermiques.

Pour cette raison, il est généralement nécessaire de prévoir une couche additionnelle sur l'une et l'autre des deux faces inférieure et supérieure du composant, de manière à diminuer les effets du cintrage qui apparaîtrait au cours du co-frittage d'un composant de structure non symétrique.

L'invention se propose de pallier ces différentes difficultés découlant du co-frittage de deux céramiques différentes, notamment la difficulté d'obtenir une parfaite adéquation de celles-ci, ainsi que la fragilité du composant s'il n'est pas prévu une structure symétrique.

A cet effet, selon l'invention, le second matériau est un verre, la couche supplémentaire étant réalisée aprés frittage du bloc de céramique, par dépôt d'une pâte de verre en surface du bloc puis vitrification, de manière à permettre la pénétration du verre dans la céramique et la production d'une zone de diffusion réciproque à l'interface verre-céramique.

La pénétration du verre entre les grains de la céramique diminue considérablement la fragilité au niveau de la zone de diffusion par rapport à une diffusion essentiellement à l'état solide comme dans la technique antérieure. L'excellent accrochage du verre à la céramique évite le recours à une structure symétrique et laisse ainsi une plus grande marge de manoeuvre dans la conception du composant (notamment lorsqu'il s'agit de réaliser un composant de protection tel qu'un substrat ou un boîtier).

Très avantageusement, la composition du verre est dépourvue de constituants contenant des atomes lourds, notamment d'oxyde de plomb et d'oxyde de bismuth.

Une composition de verre adaptée à la réalisation d'un composant selon l'invention est la suivante (les proportions sont données en poids) :

| | | | | | |
|---|---|---|---|---|---|
| $SiO_2$ | : | 45 | à | 55 | % |
| BaO | : | 10 | à | 15 | % |
| $Al_2O_3$ | : | 8 | à | 12 | % |
| $Na_2O$ | : | 5 | à | 10 | % |
| $B_2O_3$ | : | 7 | à | 15 | % |
| SrO | : | 5 | à | 8 | % |
| CaO | : | 1 | à | 4 | % |
| $P_2O_5$ | : | 0,5 | à | 2 | % |
| $K_2O$ | : | 0,1 | à | 1 | % |
| PbO, $Bi_2O_3$ | : | néant | | | |

Une composition particulière, considérée comme avantageuse, est la suivante :

| | | | | | | | |
|---|---|---|---|---|---|---|---|
| $SiO_2$ | : 48 % | | $Na_2O$ | : 7 % | | CaO | : 3 % |
| BaO | : 14 % | | $B_2O_3$ | : 9,5 % | | $P_2O_5$ | : 1 % |
| $Al_2O_3$ | : 11 % | | SrO | : 6 % | | $K_2O$ | : 0,5 % |

Les proportions des différents constituants sont ajustées en fonction de la nature et des propriétés de la céramique sous-jacente, pour obtenir une température de fusion du verre qui reste inférieure à la température de frittage de la céramique, un coefficient de dilatation de même ordre de grandeur que celle-ci, et un accrochage sans destruction à l'interface.

Outre les propriétés avantageuses par rapport à l'état de la technique mentionnée plus haut, un tel type de verre de surface est dans l'ensemble plus léger (du point de vue des numéros atomiques de ses constituants) qu'une céramique de surface, comme cela était décrit dans le document cité plus haut.

En ce qui concerne la céramique sous-jacente, celle-ci est de préférence une céramique diélectrique à base de titanate de baryum avec addition d'un sel de bismuth, la proportion de ce dernier constituant étant choisie de manière que la température de frittage reste supérieure à la température de fusion du verre.

Un premier avantage, déjà connu, de l'addition d'un sel de bismuth est l'abaissement de la température de frittage, le sel de bismuth étant utilisé comme agent fondant : la température de frittage peut être abaissée par exemple à des valeurs de l'ordre de 1100°C pour une proportion de 20 % en poids de $Bi_2Ti_2O_7$.

Un second avantage est dû au fait que le frittage s'effectue avec une phase liquide, ce qui procurera par la suite un meilleur accrochage avec le verre de surface.

Enfin, le bismuth est un élément lourds (Z = 83), ce qui permet d'abaisser la température de frittage (fonction connue d'agent fondant) tout en procurant un gain du point de vue de la protection à l'encontre des rayonnements.

En variante, la céramique peut être une céramique diélectrique au plomb à base de $PbMO_3$, M étant un métal de transition ou une solution solide de tels métaux.

Pour M, on peut par exemple choisir une solution solide fer-niobium, manganèse-niobium ou encore tungstène-fer. La température de frittage de telles céramiques est de l'ordre de 1000°C.

Dans un mode de réalisation de l'invention, certaines au moins des couches de l'empilement portent des plages métalliques.

Ces plages métalliques peuvent être aussi bien des électrodes ayant une fonction électrique (par exemple électrodes de condensateur, conducteurs d'inter-connexion, ....) que des plages métalliques sans fonction électrique, prévues seulement pour renforcer la protection à l'encontre des rayonnements.

Ces plages métalliques sont de préférence réalisées en un métal lourd ou un alliage comportant des métaux lourds, par exemple un alliage platine-palladium-or, ou un alliage essentiellement composé de plomb.

L'alliage platine-palladium-or (par exemple dans des proportions respectives de 40 % -20 % -40 %), qui avait été autrefois utilisé comme métal d'électrodes pour des céramiques frittant à des températures relativement élevées, procure dans le cas de l'invention une excellente protection à l'encontre des rayonnements, du fait du numéro atomique élevé de ses différents constituants -(respectivement Z = 78, 46 et 79). Grâce à cette excellente efficacité, il est possible de diminuer ainsi l'épaisseur des plages métalliques et diélectriques par rapport à des compositions métalliques de type classique.

En variante, il est possible d'utiliser pour les plages métalliques du plomb (Z = 82), le procédé étant alors différent : au lieu d'une sérigraphie en couche mince sur les feuilles de céramique crue avant empilement (comme dans le cas précédent), on coule le plomb dans des fentes ménagées dans le bloc céramique au moyen d'une pâte évanescente déposée sur les feuilles de céramique crue avant empilement.

Le procédé de fabrication du composant de l'invention est le suivant :

. préparation des feuilles de céramique crue,

. éventuellement (si l'on souhaite que le composant comporte des plages métalliques enterrées), sérigraphie du motif correspondant sur les feuilles au moyen d'une encre métallique (ou, en variante, d'une encre évanescente pour le coulage ultérieur de métallisations au plomb),

. empilement des différentes feuilles et compression en un bloc homogène,

. frittage de la céramique,

. après refroidissement, dépôt de surface d'une pâte de verre, par sérigraphie, évaporation sous vide ou autre moyen,

. second traitement thermique provoquant la fusion de la pâte de verre, sa pénétration entre les grains de céramique et l'émaillage en surface. La température de ce traitement est de préférence de l'ordre de 850 à 1150°, en fonction de la température de fusion du verre et de la température de cuisson de la céramique.

Dans un exemple particulier de réalisation de l'invention, donné à titre illustratif, des condensateurs ont été réalisés avec un diélectrique dont la composition générale est :

$BaTiO_3$ + 0,19 $Bi_2Ti_2O_7$ + 0,025 $Ca^{Zn}O_3$ + 0,015 additifs divers.

Les feuilles céramiques, de 70 µm d'épaisseur ont été sérigraphiées avec une pâte de Pt.Pd. Au -(proportions 40-20-40) dont la teneur métallique était de 50 %.

Après empilement des différentes feuilles et compression en un bloc homogène, les condensateurs ont été obtenus par :

. brûlage des liants organiques de mise en forme, à une température inférieure à 300°C ;

. cuisson de la céramique dans un four à passage (temps de passage 6h30) avec une température maximale de 1100°C (10 mn à cette température) ;

. enduction des extrémités avec une pâte de métal conducteur et cuisson de cette pâte.

Le verre de la composition avantageuse déjà citée a ensuite été déposé sur les deux faces de plus grande dimension du condensateur et, après séchage, "l'émaillage" de ce verre a été opéré dans les conditions suivantes :

-four statique ;

-montée en température en 1 heure et refroidissement en 1h 30 mn ;

-température maximale 950°C avec 1/4 heure de palier à cette température.

**Revendications**

1. Un composant céramique multicouches, comportant un bloc fritté de feuilles empilées de céramique en un premier matériau contenant une forte proportion d'atomes lourds, ce bloc étant pourvu sur l'une au moins de ses faces d'une

couche supplémentaire en un second matériau contenant une forte proportion d'atomes légers,

caractérisé en ce que le second matériau est un verre, la couche supplémentaire étant réalisée après frittage du bloc de céramique, par dépôt d'une pâte de verre en surface du bloc puis vitrification, de manière à permettre la pénétration du verre dans la céramique et la production d'une zone de diffusion réciproque à l'interface verre-céramique.

2. Un composant selon la revendication 1, dans lequel la composition du verre est dépourvue de constituants contenant des atomes lourds.

3. Un composant selon la revendication 2, dans lequel la composition du verre est la suivante :

| | | | | | |
|---|---|---|---|---|---|
| $SiO_2$ | : | 45 | à | 55 | % |
| BaO | : | 10 | à | 15 | % |
| $Al_2O_3$ | : | 8 | à | 12 | % |
| $Na_2O$ | : | 5 | à | 10 | % |
| $B_2O_3$ | : | 7 | à | 15 | % |
| SrO | : | 5 | à | 8 | % |
| CaO | : | 1 | à | 4 | % |
| $P_2O_5$ | : | 0,5 | à | 2 | % |
| $K_2O$ | : | 0,1 | à | 1 | % |
| PbO, $Bi_2O_3$ | : | néant. | | | |

4. Un composant selon la revendication 1, dans lequel la céramique est une céramique diélectrique à base de titanate de baryum avec addition d'un sel de bismuth, la proportion de ce dernier constituant étant choisie de manière que la température de frittage reste supérieure à la température de fusion du verre.

5. Un composant selon la revendication 1, dans lequel la céramique est une céramique diélectrique au plomb à base de $PbMO_3$, M étant un métal de transition ou une solution solide de tels métaux.

6. Un composant selon la revendication 1, dans lequel certaines au moins des couches de l'empilement portent des plages métalliques.

7. Un composant selon la revendication 6, dans lequel les plages métalliques sont réalisées en un métal lourd ou en un alliage comportant des métaux lourds.

8. Un composant selon la revendication 7, dans lequel les plages métalliques sont en un alliage platine-palladium-or.

9. Un composant selon la revendication 7, dans lequel les plages métalliques sont essentiellement composés de plomb.

Office européen des brevets

# RAPPORT DE RECHERCHE EUROPEENNE

Numéro de la demande

EP 86 40 0997

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 534 728 (L.C.C. STEAFIX)<br>--- | | H 01 G 4/30<br>C 04 B 41/50 //<br>C 03 C 3/091 |
| A | US-A-3 496 008 (F.J. HASKINS)<br>--- | | |
| A | FR-A-2 528 618 (EUROFARAD EFD)<br>--- | | |
| A | US-A-4 268 313 (DONG-SIL PARK)<br>----- | | |
| | | | **DOMAINES TECHNIQUES RECHERCHES (Int. Cl.4)** |
| | | | C 04 B 41/00<br>H 01 G 4/00<br>C 03 C 8/00<br>C 03 C 3/00 |

Le présent rapport de recherche a été établi pour toutes les revendications

| Lieu de la recherche | Date d'achèvement de la recherche | Examinateur |
|---|---|---|
| LA HAYE | 23-07-1986 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82